# FASCICULE DE BREVET EUROPEEN

(11) **EP 0 601 147 B1**
(45) Date de publication et mention de la délivrance du brevet: **03.01.1996**
(21) Numéro de dépôt: 93911839.4
(22) Date de dépôt: 30.04.1993
(51) Int. Cl.: B23K 26/02

(54) **DISPOSITIF DE SECURITE POUR MACHINES UTILISANT UN FAISCEAU LASER ET PROCEDE DE MISE EN OEUVRE**
SICHERHEITVORRICHTUNG FÜR LASERMACHINE UND VERFAHREN ZUR DURCHFÜHRUNG DER VORRICHTUNG
LASER BEAM MACHINE SAFETY DEVICE AND METHOD OF USE

(30) Priorité: 30.04.1992 FR 9205414
(43) Date de publication de la demande: 15.06.1994
(73) Titulaire: LECTRA SYSTEMES, F-33610 Cestas Bourg (FR)
(72) Inventeur: PHILIPPE, Michel, F-33610 Cestas (FR); SOULIGNAC, Benoit, F-33850 Léognan (FR)
(74) Mandataire: Hasenrader, Hubert
(86) Numéro de dépôt international: FR9300423
(87) Numéro de publication internationale: WO9322095

(56) Documents cités:
- GB-A- 2 062 901
- US-A- 4 197 454
- PATENT ABSTRACTS OF JAPAN vol. 11, no. 138 (E-503)2 Mai 1987 & JP-A-61 278 143 (SEIKO EPSON CORP.) 9 December 1986
- PATENT ABSTRACTS OF JAPAN vol. 8, no. 82 (P-268)(1519) 14 Avril 1984 & JP-A-58 225 328 (FUJITSU K.K9 27 December 1983

## Description

La présente invention concerne un système laser avec un dispositif de sécurité spécialement adapté aux machines automatiques utilisant un faisceau laser de longueur d'onde infrarouge de faible à très forte puissance, comme outil de découpe, de soudage, de perçage, de traitement thermique, d'enlèvement de matière, etc...

La présente invention concerne également un procédé de mise en oeuvre du dispositif précédent pour la détection des déviations d'un faisceau laser.

En général, les machines automatiques multi-axes existantes sur le marché comprennent un générateur de faisceau laser ou source laser et un trajet ou chemin optique constitué de miroirs de renvoi du faisceau laser de façon à l'acheminer au niveau de la partie utile de l'outil tel qu'une tête de coupe ou de soudage. Cette tête est fixe ou mobile, soit au bout d'un bras robot, soit selon le principe des traceurs XY, soit sur un portique mobile à plus de deux axes.

Un des principaux problèmes de ce type de machines réside dans la nécessité d'assurer la sécurité du personnel et de la machine. En effet, compte tenu de la technologie employée (acheminement du faisceau par miroirs de renvoi) il se peut que le rayon laser soit dévié de sa trajectoire initiale et constitue alors un danger pour la sécurité des hommes et du matériel.

Une des techniques utilisées dans le cadre de la sécurité des machines laser consiste à protéger l'accès au chemin optique du faisceau par des capots, des soufflets et des diaphragmes passifs (tubes métalliques traversés par le laser). Cette technique a pour inconvénient de ne pas permettre la détection d'une éventuelle déviation de la trajectoire du faisceau, car elle ne fait qu'absorber dans les diaphragmes passifs tout ou partie de l'énergie du faisceau en fonction de la puissance du laser. Cette méthode présente donc toujours un risque pour le matériel et le personnel.

Il existe d'autres techniques qui ont pour objet de contrôler en continu l'alignement du faisceau laser. Pour cela, des capteurs thermiques (thermocouples, fils chauds, ....) sont disposés à la périphérie d'une section traversée par le faisceau. Le déséquilibre de l'échauffement d'un des capteurs par rapport aux autres fournit des renseignements (sens, importance, ....) concernant la déviation du faisceau laser par rapport à la trajectoire normale. Cette information est traitée électroniquement par un calculateur afin de corriger automatiquement l'orientation des miroirs de renvoi pour réaligner le faisceau sur sa trajectoire théorique. Cette méthode très coûteuse n'est utilisée que sur des systèmes nécessitant un contrôle permanent de l'alignement du faisceau laser et présente de plus l'inconvénient de gérer la sécurité par informatique. Or, pour être réellement efficace et fiable, une sécurité doit agir directement sur le circuit de commande du faisceau laser, sans nécessiter de traitement informatique. De plus, si la puissance du laser est trop élevée les capteurs thermiques peuvent être détériorés et deviennent alors inutilisables.

L'invention a pour but de résoudre les problèmes techniques précédents de manière satisfaisante.

Ce but est atteint conformément à l'invention au moyen d'un système laser avec un dispositif de sécurité pour l'utilisation d'un faisceau laser à partir d'une source suivant un trajet optique déterminé comportant, éventuellement, des miroirs, associée à un réseau d'exploitation d'un signal de contrôle du faisceau, caractérisé en ce que ledit réseau d'exploitation comprend au moins un élément amovible interrupteur du signal, disposé sur le trajet optique et qui est constitué au moins partiellement d'un conducteur dudit signal entourant ledit faisceau en étant susceptible d'interagir avec lui en cas de déviation pour provoquer instantanément la coupure du signal et l'interruption du faisceau.

Selon un premier mode de réalisation, ledit élément interrupteur est entièrement conducteur.

Selon un autre mode de réalisation, ledit conducteur du signal est porté par un cadre dont l'axe central coïncide avec la direction normale du faisceau et qui est solidaire d'un organe de support pourvu de moyens de connexion dudit conducteur avec le réseau d'exploitation.

Selon une caractéristique, ledit élément interrupteur est annulaire et ledit conducteur forme une boucle autour du faisceau.

Selon une autre caractéristique, ledit conducteur du signal est destructible par l'énergie du faisceau.

Selon une première variante de réalisation, ledit conducteur est constitué d'au moins une piste de circuit imprimé couplée au circuit électrique du réseau d'exploitation.

Selon une autre variante, ledit conducteur est constitué d'au moins une fibre optique reliée à un émetteur-récepteur couplé au réseau d'exploitation.

Selon encore une autre variante, ledit conducteur est constitué d'un conduit pneumatique relié à un convertisseur électro-pneumatique couplé au réseau d'exploitation.

Un autre objet de l'invention est un procédé de détection des déviations d'un faisceau laser émis à partir d'une source et suivant un trajet optique déterminé comportant des miroirs associée à un réseau d'exploitation d'un signal de contrôle dudit faisceau, caractérisé en ce qu'on insère dans le réseau d'exploitation, le long du trajet optique, autour du faisceau et de préférence à l'entrée et à la sortie des miroirs, des éléments amovibles interrupteurs du signal, constitués au moins partiellement d'un conducteur dudit signal susceptible d'interagir avec le faisceau pour provoquer instantanément la coupure du signal et l'interruption du faisceau.

Le système et le procédé de l'invention permettent d'assurer une grande sécurité de façon simple et économique.

Le dispositif utilisé dans le système laser de l'invention est conforme aux normes en vigueur et est adapté aux machines utilisant un faisceau laser de longueur d'onde infrarouge dont la puissance peut varier de quelques watts à plusieurs kilowatts.

L'invention peut être mise en oeuvre en disposant plusieurs éléments interrupteurs amovibles le long du trajet optique parcouru par le faisceau laser par exemple à l'entrée et à la sortie de chaque miroir de renvoi.

Celui qui est placé en entrée peut agir vis-à-vis des faibles déviations du faisceau tandis que celui qui est placé en sortie prend en compte les fortes déviations. L'accès au trajet optique peut être protégé de façon complémentaire par des moyens traditionnels tels que capots, soufflets et diaphragmes passifs.

Les éléments interrupteurs sont traversés par le faisceau laser, sans pour autant être en contact avec ce dernier. Un des modes de réalisations possibles consiste donc à donner auxdits éléments une forme annulaire d'un diamètre légèrement supérieur à celui du faisceau afin d'autoriser un léger décalage ou réglage de sa trajectoire.

Les éléments constituent alors une boucle conductrice destructible, (par exemple fusible) d'un signal (électrique, pneumatique, lumineuse, ...) et sont alors montés en série sur le réseau d'exploitation du signal de contrôle assurant la sécurité de la machine.

Le faisceau en déviant rencontre l'élément interrupteur portant le conducteur destructible. Comme il s'agit d'un laser de longueur d'onde infrarouge et que le matériau conducteur est également absorbant, la quantité d'énergie reçue par un des conducteurs lors de la déviation du faisceau provoque sa fusion et il se comporte comme un fusible en coupant le signal de contrôle. Le circuit conducteur du signal (électrique, pneumatique, lumineux,...) étant ouvert, le réseau d'exploitation du signal met automatiquement la machine en sécurité. Cette sécurité est dite active et positive car elle ne nécessite aucune gestion informatique et commande directement la mise en sécurité du système, même dans le cas d'une défaillance du réseau d'exploitation.

Les éléments interrupteurs sont d'un faible coût car ils sont détruits par contact avec le faisceau laser et sont remplacés.

Les éléments interrupteurs sont donc amovibles et sont munis d'organes de support mécaniques, qui permettent de les remplacer et de les repositionner facilement par rapport à l'alignement théorique du faisceau laser.

L'invention sera mieux comprise à la lecture de la description qui va suivre, accompagnée des dessins annexés sur lesquels :
- la figure 1 est une vue d'ensemble du chemin optique sur une machine outil fonctionnant en coordonnées XY ;
- la figure 2 représente une fraction de trajet optique équipé des éléments interrupteurs amovibles du dispositif de sécurité de l'invention ;
- la figure 3 est un schéma du cablâge (électrique, pneumatique, lumineux, ...) du réseau d'exploitation du signal du dispositif de l'invention ;
- les figures 4a à 4d représentent des modes de réalisations des éléments interrupteurs amovibles du dispositif de l'invention ;
- les figures 5a et 5b représentent un mode de réalisation des organes de support et de connexion des éléments interrupteurs en vue de face et de côté ; et
- la figure 6 est une représentation schématique d'un mode de mise en oeuvre du procédé de l'invention.

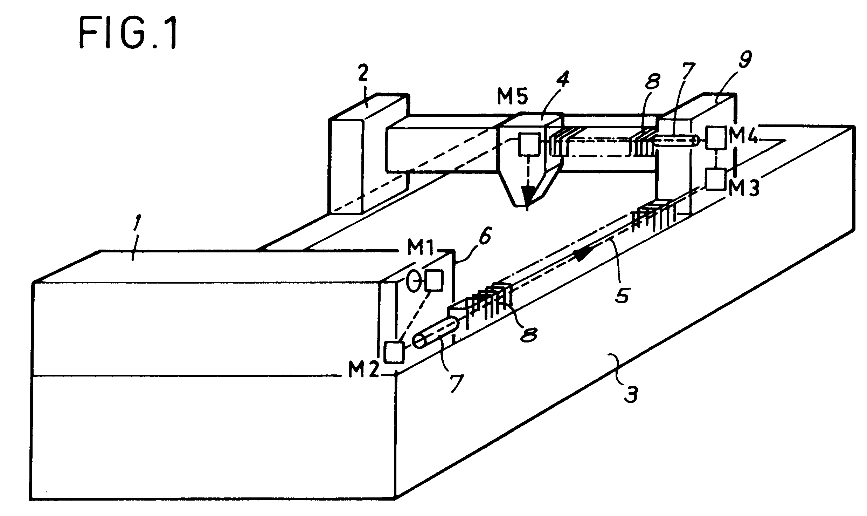

La figure 1 représente une machine de coupe laser 3 fonctionnant selon le principe des traceurs XY. Elle comprend une source laser 1, une poutre transversale et deux chariots moteurs constituant l'ensemble mobile 2 sur lequel se déplace une tête de coupe 4. Le faisceau laser 5 est acheminé depuis la source laser jusqu'à la tête de coupe 4 le long d'un trajet comprenant cinq miroirs de renvoi (M1, M2, M3, M4 , M5). L'accès au trajet ou chemin optique et donc au faisceau laser 5 est protégé par la mise en place de capots 6, de diaphragmes passifs 7 et de soufflets de protection 8, qui sont des moyens traditionnels.

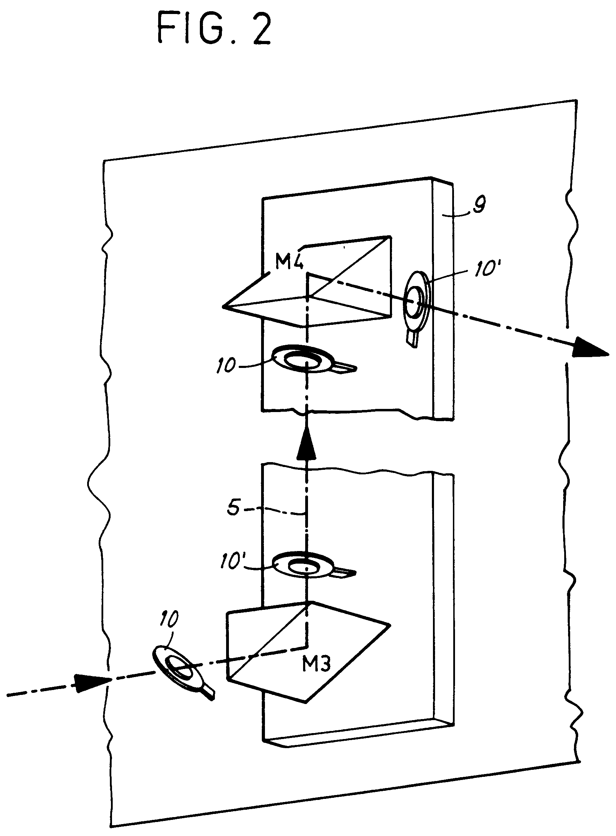

La figure 2 est un agrandissement de la zone du chemin optique comprenant les miroirs de renvoi M3 et M4 fixés sur le support 9 situé sur l'ensemble mobile 2. Dans ce mode de réalisation, les éléments interrupteurs sont localisés. Le sens de référence étant celui de la diffusion du faisceau laser, les éléments 10 sont à l'entrée des miroirs. A cet endroit, compte-tenu de l'éloignement du miroir précédent (M2 ou M3) qui est à l'origine d'une éventuelle déviation du faisceau, la moindre variation angulaire du faisceau est prise en compte à l'entrée du miroir suivant respectivement M3 ou M4. Des éléments interrupteurs 10' sont également disposés en sortie de miroir afin de pouvoir tenir compte des grandes déviations angulaires. En effet, une grande variation angulaire pouvant avoir lieu très rapidement, elle ne couperait l'élément d'entrée 10 du miroir suivant que de manière fugitive, le matériau conducteur du signal sur l'élément n'aurait donc pas forcément le temps de fondre. Après avoir traversé l'élément 10, la déviation se stabilise et est prise en compte par l'élément de sortie 10' qui est le plus proche du miroir d'origine de la déviation.

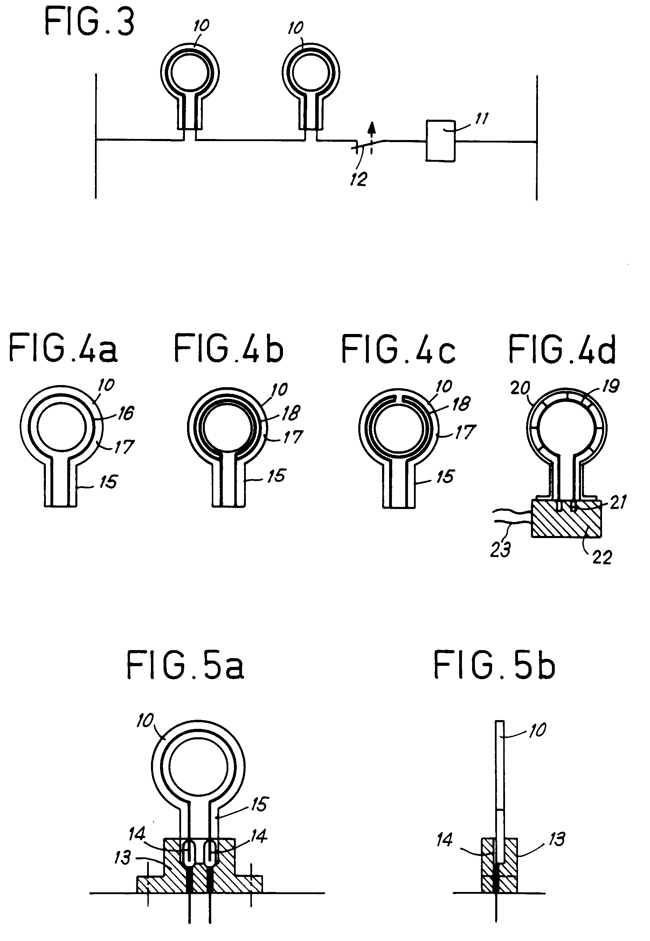

La figure 3 représente le réseau d'exploitation du signal de contrôle (électrique, pneumatique, lumineux, ....) du faisceau. Ce réseau est directement couplé au circuit électrique d'alimentation de la source laser par l'intermédiaire du relais ou contacteur de puissance 11. Dans certains cas (élément interrupteur à conducteur électrique), il peut même être confondu avec lui. Tous les éléments interrupteurs 10 et 10' du réseau d'exploitation du signal de contrôle sont câblés en série avec les boutons d'arrêt d'urgence, ou les contacteurs de puissance, de la machine et commandent directement le contacteur de mise en sécurité de la machine qui arrête le faisceau laser par obturation de la sortie laser, ou extinction de la source laser 1. Dès que l'un des éléments interrupteurs 10 ou 10' est détérioré, ou qu'un des boutons d'arrêt d'urgence 12 est actionné, la sécurité est activée. La remise en route de la machine peut être effectuée après ré-alignement du faisceau laser et remplacement de l'élément interrupteur détruit. D'autre part, si, pour une raison ou pour une autre, le réseau d'exploitation du signal de contrôle est ouvert (faux contact, erreur de branchement, ...) la sécurité est activée. Il s'agit donc d'une sécurité active et positive qui assure une protection fiable et efficace du matériel et du personnel.

Les figures 4a à 4d représentent divers modes de réalisation d'un élément interrupteur 10 ou 10'. Cet élément supporte un conducteur 16, 18, 19 du signal de contrôle réalisé en un matériau absorbant l'énergie du faisceau laser 5 de longueur d'onde infrarouge (par exemple : plomb, cuivre, étain, tube plastique, fibre optique....), de telle façon qu'il entoure au moins partiellement et sans contact le faisceau 5 en formant une boucle comprise dans un plan traversé par le faisceau laser.

Selon un autre mode de réalisation (non représenté) l'élément interrupteur est constitué entièrement d'un matériau rigide conducteur du signal. Le conducteur peut aussi être porté par un cadre 17, 20 ou intégré dans celui-ci. Le cadre est alors solidaire d'un organe de support 15 servant au positionnement et au maintien par rapport à la trajectoire théorique du faisceau laser 5. Selon un premier mode de réalisation (figure 4a), le conducteur est électrique et est constitué d'au moins une piste de circuit imprimé 16 en forme d'anneau ouvert de diamètre légèrement supérieur à celui du faisceau laser 5. Les deux extrémités de la piste se prolongeant sous la forme d'une patte 15 servant à maintenir et à positionner l'élément 10 ou 10' ainsi réalisé, ladite patte 15 permettant également de relier la piste 16 au circuit électrique du réseau d'exploitation.

Le mode de réalisation des figures 4b et 4c se situe encore dans la technologie du circuit imprimé. En divisant le matériau fusible en une série de pistes parallèles concentriques de surfaces ou sections plus faibles 18, globalement ayant les mêmes caractéristiques électriques que la piste 16 du mode de réalisation précédent, mais toutes regroupées en deux extrémités de piste dans la patte 15, on diminue le temps de fusion du matériau conducteur et on améliore ainsi le temps de réponse du dispositif de sécurité. Afin de diminuer également le temps de fusion du matériau conducteur, il est intéressant d'augmenter ses capacités d'absorption de l'énergie transportée par le faisceau laser en l'assombrissant par un traitement de surface, par exemple traitement thermique, peinture, etc...

La figure 4d représente encore un autre mode de réalisation de l'élément interrupteur utilisant une fibre optique 19 comme conducteur lumineux. La fibre optique 19 est maintenue en place par un support 20. Cette fibre optique est reliée à un émetteur-récepteur 22 qui convertit le signal lumineux en signal électrique. Cet appareil 22 est branché en série sur le circuit électrique du réseau d'exploitation ou relié à la commande numérique de la machine laser, par l'intermédiaire des fils 23. Lors de la déviation du faisceau laser, la fibre optique 19 est sectionnée, le signal lumineux est donc coupé et l'émetteur-récepteur 22 réagit comme un interrupteur, c'est-à-dire qu'il ouvre le circuit électrique. Dans ce mode de réalisation, seul l'ensemble fibre optique 19 et support 20 est remplacé. La connection avec l'émetteur-récepteur 22 est réalisée par l'intermédiaire des broches 21.

De façon similaire, on pourrait utiliser, par exemple, un conduit pneumatique souple (non représenté) au lieu de la fibre optique 19. Un convertisseur électropneumatique remplacerait alors l'émetteur-récepteur (22).

Les figures 5a et 5b représentent un mode de réalisation de l'organe de support de l'élément interrupteur 10 ou 10' des figures 4a à 4c. le montage de l'élément 10 ou 10' est réalisé par l'emboîtement ajusté de la patte 15 du conducteur (circuit imprimé) dans une fente du support 13 fixé sur la machine. Le maintien est assuré par le pincement de la patte 15 de l'élément 10 ou 10' dans la fente pourvue de contacts électriques 14 qui sont reliés aux extrémités des pistes 16 ou 18.

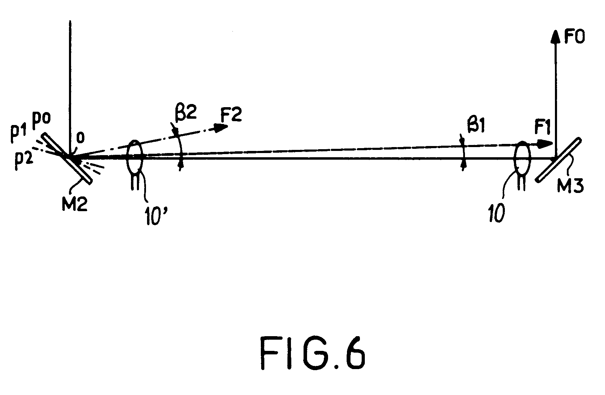

La figure 6 illustre de façon schématique un mode de mise en oeuvre du procédé de l'invention.

La position p0 du miroir M2 correspond à la trajectoire normale F0 du faisceau. Lors d'une modification de l'orientation du miroir M2 (position p1), la faible variation angulaire β1 correspondante est prise en compte par l'élément interrupteur 10 situé à l'entrée du miroir M3. Cette disposition est utile car la faible amplitude de la variation n'amène pas le faisceau laser F1 à détruire le conducteur de l'élément interrupteur 10' positionné en sortie du miroir M2. Par contre, compte tenu de l'éloignement de l'élément 10 du point O origine de la déviation angulaire β1, le faisceau laser interagit avec cet élément interrupteur du dispositif de sécurité. En conséquence, plus l'élément 10 situé à l'entrée d'un miroir est positionné loin du miroir précédent qui est origine de la déviation, plus la sensibilité du dispositif aux faibles variations est accrue.

Si le miroir M2 passe de la position normale p0 à p2 de façon rapide, la déviation β2 du faisceau laser peut ne pas être prise en compte par l'élément 10. En effet, la durée de l'interaction entre le faisceau F2 et le conducteur de l'élément 10 étant trop courte, le conducteur pourrait ne pas être complètement détruit. Une déviation de ce type est détectée de manière plus fiable par l'élément interrupteur 10'. Plus l'élément interrupteur 10' situé à la sortie d'un miroir est positionné près de ce miroir (origine de la déviation angulaire), plus il pourra détecter de fortes variations angulaires.

## Revendications

1. Système laser avec un dispositif de sécurité pour l'utilisation d'un faisceau laser (5) à partir d'une source (1) suivant un trajet optique déterminé comportant, éventuellement, des miroirs (M1-M5), associée à un réseau d'exploitation d'un signal de contrôle du faisceau, caractérisé en ce que ledit réseau d'exploitation comprend au moins un élément amovible interrupteur (10,10') du signal, disposé sur le trajet optique et qui est constitué au moins partiellement d'un conducteur (16,18,19) dudit signal entourant ledit faisceau (5) en étant susceptible d'interagir avec lui en cas de déviation pour provoquer instantanément la coupure du signal et l'interruption du faisceau (5).

2. Système selon la revendication 1, caractérisé en ce que ledit élément interrupteur est entièrement conducteur.

3. Système selon la revendication 1, caractérisé en ce que ledit conducteur du signal est porté par un cadre (17) dont l'axe central coïncide avec la direction normale du faisceau et qui est solidaire d'un organe de support (15) pourvu de moyens de connection (14,21) dudit conducteur avec le réseau d'exploitation.

4. Système selon l'une des revendications précédentes, caractérisé en ce que ledit élément interrupteur (10,10') est annulaire et ledit conducteur (16,18,19) forme une boucle autour du faisceau (5).

5. Système selon l'une des revendications précédentes, caractérisé en ce que ledit conducteur (16,18,19) du signal est destructible par l'énergie du faisceau (5).

6. Système selon l'une des revendications précédentes, caractérisé en ce que ledit conducteur (16,18) est constitué d'au moins une piste de circuit imprimé couplée au circuit électrique du réseau d'exploitation.

7. Système selon la revendication 6, caractérisé en ce que ledit conducteur (16,18) est constitué d'une série de pistes concentriques de faible section.

8. Système selon l'une des revendications 1 à 5, caractérisé en ce que ledit conducteur est constitué d'au moins une fibre optique (19) reliée à un émetteur-récepteur (22) couplé au réseau d'exploitation.

9. Système selon l'une des revendications 1 à 5, caractérisé en ce que ledit conducteur est constitué d'un conduit pneumatique relié à un convertisseur électro-pneumatique couplé au réseau d'exploitation.

10. Système selon l'une des revendications précédentes, caractérisé en ce que les éléments interrupteurs (10,10') sont montés en série sur le réseau d'exploitation qui est relié au circuit électrique d'alimentation de la source laser (1).

11. Système selon l'une des revendications précédentes, caractérisé en ce que ledit conducteur (16,18,19) est réalisé en un matériau absorbant l'énergie du faisceau (5).

12. Système selon l'une des revendications précédentes, caractérisé en ce que lesdits éléments interrupteurs (10,10') sont placés à l'entrée et/ou à la sortie des miroirs (M1-M5).

13. Procédé de détection des déviations (β1, β2) d'un faisceau laser (5, F1, F2), émis à partir d'une source (1) et suivant un trajet optique déterminé comportant des miroirs (M1-M5) associée à un réseau d'exploitation d'un signal de contrôle dudit faisceau, caractérisé en ce qu'on insère dans le réseau d'exploitation, le long du trajet optique, autour du faisceau et de préférence à l'entrée et à la sortie des miroirs, des éléments amovibles interrupteurs (10, 10') du signal, constitués au moins partiellement d'un conducteur (16, 18, 19) dudit signal susceptible d'interagir avec le faisceau pour provoquer instantanément la coupure du signal et l'interruption du faisceau.

## Claims

1. Laser system with a safety device for using a laser beam (5) from a source (1) following a determined optical path that optionally includes mirrors (M1-M5) each associated with an operating network for a beam monitoring signal, the device being characterized in that said operating network comprises at least one removable signal interrupter element (10, 10') disposed on the optical path and constituted at least in part by a conductor (16, 18, 19) for said signal that surrounds said beam (5) and that is suitable for interacting with the beam in the event of the beam deviating, thereby instantaneously causing the monitoring signal to be interrupted and thus causing the beam (5) to be interrupted.

2. System according to claim 1, characterized in that said interrupter element is entirely conductive.

3. System according to claim 1, characterized in that said signal conductor is carried by a frame (17) whose central axis coincides with the normal direction of the beam and which is secured to a support member (15) provided with means (14, 21) for connecting said conductor to the operating network.

4. System according to one of the preceding claims, characterized in that said interrupter element (10, 10') is annular and said conductor (16, 18, 19) forms a loop around the beam (5).

5. System according to one of the preceding claims, characterized in that said signal conductor (16, 18, 19) is suitable for being destroyed by the energy of the beam (5).

6. System according to one of the preceding claims, characterized in that said conductor (16, 18) is constituted by at least one printed circuit track that is coupled to the electrical circuit of the operating network.

7. System according to claim 6, characterized in that said conductor (16, 18) is constituted by a series of concentric tracks of small section.

8. System according to one of claims 1 to 5, characterized in that said conductor is constituted by at least one optical fiber (19) connected to a transmitter/receiver (22) coupled to the operating network.

9. System according to one of claims 1 to 5, characterized in that said conductor is constituted by a pneumatic duct connected to an electropneumatic converter coupled to the operating network.

10. System according to one of the preceding claims, characterized in that the interrupter elements (10, 10') are connected in series on the operating network which is connected to the electrical power supply circuit of the laser source (1).

11. System according to one of the preceding claims, characterized in that said conductor (16, 18, 19) is made of a material that absorbs the energy of the beam (5).

12. System according to one of the preceding claims, characterized in that said interrupter elements (10, 10') are placed at the inlets and/or at the outlets of the mirrors (M1-M5).

13. Method of detecting deviations (β1, β2) of a laser beam (5, F1, F2) emitted by a source (1) and following a given optical path that includes mirrors (M1-M5), the source being associated with an operating network for a beam monitoring signal, the method being characterized in that removable interrupter elements (10, 10') of the signal are inserted in the operating network along the optical path and around the beam, preferably at the inlets and at the outlets of the mirrors, each intertupter element being constituted, at least in part, by a conductor (16, 18, 19) of said signal and suitable for interacting with the beam so as to cause the monitoring signal to be interrupted instantly and thus cause the beam to be interrupted.

## Patentansprüche

1. Lasersystem mit einer Sicherheitsvorrichtung zur Benutzung eines Laserstrahls (5) aus einer Quelle (1) längs eines bestimmten optischen Wegs, der möglicherweise Spiegel (M1, M5) aufweist, die einem Netz zur Erzeugung eines Signals zur Steuerung des Strahls zugeordnet ist, dadurch **gekennzeichnet,** daß das genannte Erzeugungsnetz mindestens ein abnehmbares Unterbrecherelement (10, 10') für das Signal aufweist, das auf dem optischen Weg angeordnet ist und das mindestens teilweise von einem Leiter (16, 18, 19) für das genannte Signal gebildet ist, der den genannten Strahl (5) umgibt und dabei imstande ist, mit diesem im Fall der Abweichung in Wechselwirkung zu treten, um augenblicklich die Unterbrechung des Signals und die Unterbrechung des Strahls (5) hervorzurufen.

2. System nach Anspruch 1, dadurch **gekennzeichnet,** daß genannte Unterbrecherelement gänzlich ein Leiter ist.

3. System nach Anspruch 1, dadurch **gekennzeichnet,** daß der genannte Leiter für das Signal von einem Rahmen (17) getragen ist, dessen Mittelachse mit der Normalrichtung des Strahls zusammenfällt und der fest mit einem Trägerorgan (15) verbunden ist, das mit Mitteln zur Verbindung (14, 21) des genannten Leiters mit dem Erzeugungsnetz versehen ist.

4. System nach einem der vorangehenden Ansprüche, dadurch **gekennzeichnet,** daß das genannte Unterbrecherelement (10, 10') ringförmig ist und der genannte Leiter (16, 18, 19) eine Schleife rund um den Strahl (5) bildet.

5. System nach einem der vorangehenden Ansprüche, dadurch **gekennzeichnet,** daß der genannte Leiter (16, 18, 19) für das Signal durch die Energie des Strahles (5) zerstörbar ist.

6. System nach einem der vorangehenden Ansprüche, dadurch **gekennzeichnet,** daß der genannte Leiter (16, 18) aus mindestens einer gedruckten Schaltungsbahn besteht, die mit der elektrischen Schaltung des Erzeugungsnetzes gekoppelt ist.

7. System nach Anspruch 6, dadurch **gekennzeichnet,** daß der genannte Leiter (16, 18) von einer Reihe von konzentrischen Bahnen mit geringem Querschnitt gebildet ist.

8. System nach einem der Ansprüche 1 bis 5, dadurch **gekennzeichnet,** daß der genannte Leiter aus mindestens einer optischen Faser (19) gebildet ist, die mit einem Sender/-Empfänger (22) verbunden ist, der mit dem Erzeugungsnetz gekoppelt ist.

9. System nach einem der Ansprüche 1 bis 5, dadurch **gekennzeichnet,** daß der genannte Leiter von einer pneumatischen Leitung gebildet ist, die mit einem elektro-pneumatischen Wandler verbunden ist, der an das Erzeugungsnetz angekoppelt ist.

10. System nach einem der vorangehenden Ansprüche, dadurch **gekennzeichnet,** daß die Unterbrecherelemente (10, 10') in Reihe auf dem Erzeugungsnetz angebracht sind, das mit dem elektrischen Speisekreis für die Laserquelle (1) verbunden ist.

11. System nach einem der vorangehenden Ansprüche, dadurch **gekennzeichnet,** daß der genannte Leiter (16, 18, 19) aus einem die Energie des Strahles (5) absorbierenden Material gebildet ist.

12. System nach einem der vorangehenden Ansprüche, dadurch **gekennzeichnet,** daß die genannten Unterbrecherelemente (10, 10') am Eingang und/oder am Ausgang der Spiegel (M1-M5) angeordnet sind.

13. Verfahren zur Erfassung von Abweichungen (β1, β2) eines Laserstrahles (5, F1, F2), der von einer Quelle (1) ausgehend und längs eines bestimmten optischen Weges ausgesandt ist, der Spiegel (M1-M5) aufweist, die einem Erzeugungsnetz für ein Steuersignal des genannten Strahles zugeordnet ist, dadurch **gekennzeichnet,** daß man in das Erzeugungsnetz längs des optischen Weges rund um den Strahl und bevorzugt am Eintritt und am Austritt der Spiegel abnehmbare Unterbrecherelemente (10, 10') für das Signal anordnet, die mindestens teilweise von einem Leiter (16, 18, 19) für das genannte Signal gebildet sind und imstande sind, mit dem Strahl in Wechselwirkung zu treten, um augenblicklich die Unterbrechung des Signals und die Unterbrechung des Strahles hervorzurufen.
